# EUROPEAN PATENT APPLICATION

(11) **EP 4 693 803 A1**
(43) Date of publication of application: **11.02.2026**
(21) Application number: 24838580.9
(22) Date of filing: 25.06.2024
(51) Int. Cl.: H02J 7/00

(54) **MODULATION METHOD AND MODULATION APPARATUS FOR CASCADED ENERGY STORAGE SYSTEM, AND STORAGE MEDIUM**

(30) Priority: 07.07.2023 CN 202310827379
(71) Applicant: Contemporary Amperex Technology Co., Limited, Ningde, Fujian 352100 (CN)
(72) Inventor: CHEN, Xiaobo, Ningde, Fujian 352100 (CN); FAN, Mingshan, Ningde, Fujian 352100 (CN); LIU, Youwei, Ningde, Fujian 352100 (CN); HU, Lu, Ningde, Fujian 352100 (CN)
(74) Representative: Ziebig Hengelhaupt Intellectual Property Attorneys Patentanwaltskanzlei PartGmbB
(86) International application number: PCT/CN2024/101156
(87) International publication number: WO 2025/011324

(57) **Abstract**

Provided in the present application are a modulation method and modulation apparatus for a cascaded energy storage system, and a storage medium. The cascaded energy storage system comprises N sub-modules connected in a cascade mode, where N≥ 2. The modulation method comprises: according to N carriers, modulating waveform signals that are output by N sub-modules, wherein the N carriers correspond to the N sub-modules on a one-to-one basis; and during modulation, performing at least one instance of synchronization delay on the N carriers, so as to synchronously change initial phase angles of the N carriers, wherein during the synchronization delay, the amplitudes of the carriers remain unchanged. The modulation method provided in the present application can solve the problem of the SOCs of energy storage batteries between intra-phase sub-modules of a cascaded energy storage system being unbalanced in a carrier phase-shifted modulation method.

## Description

The present application claims priority to Chinese Patent Application No. 202310827379.2, filed with China National Intellectual Property Administration on July 07, 2023 and entitled "MODULATION METHOD AND MODULATION APPARATUS FOR CASCADED ENERGY STORAGE SYSTEM, AND STORAGE MEDIUM", which is incorporated herein by reference in its entirety.

### TECHNICAL FIELD

The present application belongs to the technical field of energy storage systems, and particularly relates to a modulation method and modulation apparatus for a cascaded energy storage system, and a storage medium.

### BACKGROUND

In a large-capacity battery energy storage system, a cascaded H-bridge energy storage system has advantages such as strong expandability, a large capacity, a high voltage, and a small harmonic content of an output voltage and current, and therefore has a wide application prospect. A modulation strategy commonly used in a cascaded H-bridge battery energy storage system is a carrier phase shifted-pulse width modulation (PS-PWM) strategy. This modulation strategy has advantages such as high quality of output electric energy, capability of outputting a relatively high equivalent switching frequency at a relatively low carrier frequency, ease of controlling an output power of each unit, and ease of implementing modular distributed control.

In the PS-PWM modulation method, a control signal is output by comparing a triangular carrier with amodulation wave, that is, a PS-PWM signal output by each submodule is generated by comparing a triangular carrier with a sinusoidal wave. Because initial phase angles of carriers corresponding to the respective submodules are slightly different, output or input powers of different submodules are not completely consistent. Consequently, states of charge (SOCs) of energy storage batteries of different submodules are unbalanced. This shortens the service life of the energy storage system and reduces the use efficiency of the system.

### SUMMARY

In view of this, the present application provides a modulation method and modulation apparatus for a cascaded energy storage system, and a storage medium, so as to solve a problem of imbalance of SOCs of energy storage batteries between intra-phase submodules of the cascaded energy storage system in a carrier phase-shifted modulation method.

### TECHNICAL SOLUTION

The technical solutions adopted in embodiments of the present application are as follows:

In a first aspect, provided is a modulation method for a cascaded energy storage system, which includes: the cascaded energy storage system includes N submodules connected in cascade, where N ≥ 2, and the modulation method includes: modulating, based on N carriers, waveform signals output by the N submodules, where the N carriers correspond one-to-one to the N submodules; and performing at least one synchronous delay on the N carriers during modulation, so as to synchronously change initial phase angles of the N carriers, where amplitudes of the carriers remain unchanged during the synchronous delay.

In a possible implementation, the synchronous delay is performed on the N carriers for a plurality of times, and duration of each synchronous delay is equal.

In a possible implementation, the duration of the synchronous delay is T1, and T1 < T, where T is a carrier period.

In a possible implementation, before the synchronous delay, an initial phase angle of an i^{th} carrier in the N carriers is (2π/N) × i, or the initial phase angle of the i^{th} carrier in the N carriers is (π/N) × i, where i is any positive integer not greater than N or any natural number not greater than N-1.

In a possible implementation, T1 = T/N.

In a possible implementation, duration of each carrier output period after first synchronous delay is equal.

In a possible implementation, the cascaded energy storage system includes a cascaded H-bridge or a cascaded half-bridge.

In a possible implementation, the carrier includes a triangular carrier or a trapezoidal carrier.

In a second aspect, provided is a modulation apparatus for a cascaded energy storage system. The cascaded energy storage system includes N submodules connected in cascade, where N ≥ 2, and the modulation apparatus includes: a modulation unit, configured to modulate, based on N carriers, waveform signals output by the N submodules, where the N carriers correspond one-to-one to the N submodules; and a delay unit, configured to perform at least one synchronous delay on the N carriers during modulation, so as to synchronously change initial phase angles of the N carriers, where amplitudes of the carriers remain unchanged during the synchronous delay.

In a possible implementation, the synchronous delay is performed on the N carriers for a plurality of times, and duration of each synchronous delay is equal.

In a possible implementation, the duration of the synchronous delay is T1, and T1 < T, where T is a carrier period.

In a possible implementation, before the synchronous delay, an initial phase angle of an i^{th} carrier in the N carriers is (2π/N) × i, or the initial phase angle of the i^{th} carrier in the N carriers is (π/N) × i, where i is any positive integer not greater than N or any natural number not greater than N-1.

In a possible implementation, T1 = T/N.

In a possible implementation, duration of each carrier output period after first synchronous delay is equal.

In a possible implementation, the cascaded energy storage system includes a cascaded H-bridge or a cascaded half-bridge.

In a possible implementation, the carrier includes a triangular carrier or a trapezoidal carrier.

In a third aspect, provided is a computer-readable storage medium. The computer-readable storage medium stores a computer program, and the computer program, when running on an electronic device, causes the electronic device to perform the modulation method according to any one of the implementations of the first aspect.

In a fourth aspect, provided is a modulation apparatus for a cascaded energy storage system, which includes a processor, a memory, and a computer program, where the computer program is stored in the memory, and the computer program, when executed by the processor, causes the modulation apparatus to perform the modulation method according to any one of the implementations of the first aspect.

In a fifth aspect, provided is a computer program product, which includes a computer program code, where the computer program code, when running on an electronic device, causes the electronic device to perform the modulation method according to any one of the implementations of the first aspect.

In a sixth aspect, provided is a chip, which includes a processor configured to invoke a computer program from a memory and execute the computer program, such that an electronic device provided with the chip performs the modulation method according to any one of the implementations of the first aspect.

### BENEFICIAL EFFECTS

The first aspect according to the embodiments of the present application has the beneficial effects that: According to the modulation method for a cascaded energy storage system according to the embodiments of the present application, during waveform signal modulation, at least one synchronous delay is performed on the N carriers applied to the N submodules, and the amplitudes of the carriers remain unchanged in a time period of the synchronous delay. Performing the synchronous delay operation on the carriers is equivalent to performing a delay operation of specific duration (namely, duration of the synchronous delay) on the N carriers at the same time, which can be understood that the carrier is translated rightwards along the direction of the X-axis (the time axis), and an intersection point between the carrier and the Y-axis (the peak value axis) corresponds to an initial phase angle of the carrier. Because the carrier is translated by a non-integer multiple of its period duration, the intersection point between the carrier and the Y-axis also changes, that is, the initial phase angle of the carrier also changes. Because the synchronization operation is performed on the N carriers, the initial phase angles of the N carriers also synchronously change (the phase difference between adjacent carriers still remains unchanged). Therefore, the carriers applied to the same submodule can have a plurality of different initial phase angles. Compared with the related art in which waveform modulation iscontinuously performed on a submodule by using the same carrier (that is, the same initial phase angle), the modulation method according to the embodiments of the present application enables a plurality of carriers with different initial phase angles to influence the same submodule. From a statistical perspective, a plurality of initial phase angles of carriers applied to the respective submodules can mutually approach, overlap, and coincide. In this way, in the present application, unequal active power distribution of the submodules caused by inconsistent initial phase angles can be mitigated, and energy unevenness can be suppressed, such that voltages on direct-current sides of the submodules tend to be consistent, and the inconsistency of the battery capacity can be alleviated, which makes the SOC of an energy storage battery tend to be balanced.

In the modulation method for a cascaded energy storage system according to the embodiments of the present application, a carrier delay operation is performed, such that a problem of imbalance of SOCs of energy storage batteries between intra-phase submodules of the cascaded energy storage system in a carrier phase-shifted modulation method can be solved. Therefore, the problem of overcharging and overdischarging of the battery set can be mitigated, the battery can operate in an optimal state, the utilization rate of the battery can be improved, and the service life of the battery can be prolonged. In addition, the control method used in the present application is relatively simple and easy to implement.

It can be understood that the modulation apparatus according to the second aspect and the fourth aspect, the computer-readable storage medium according to the third aspect, the computer program product according to the fifth aspect, and the chip according to the sixth aspect are all configured to perform the modulation method according to the first aspect. Therefore, beneficial effects that can be achieved by the modulation apparatus, the computer-readable storage medium, the computer program product, and the chip may refer to beneficial effects in the corresponding method as described above. Details are not described herein again.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components.
FIG. 1 is a topological diagram of a three-phase cascaded H-bridge battery energy storage system.
FIG. 2 is a schematic diagram of an application scenario of a modulation method for a cascaded energy storage system according to the present application.
FIG. 3 is a schematic diagram illustrating the change of an initial phase angle of a carrier #1 before and after a delay operation.
FIG. 4 is a schematic flowchart of a modulation method for a cascaded energy storage system according to an embodiment of the present application.
FIG. 5 is a waveform diagram of carriers corresponding to the respective submodules.
FIG. 6 is a comparison curve graph of a cumulative SOC difference between the solutions of the present application and the related technical solutions.
FIG. 7 is a schematic block diagram of an example of a modulation apparatus according to an embodiment of the present application.
FIG. 8 is a structural block diagram of another example of a modulation apparatus according to an embodiment of the present application.

### DETAILED DESCRIPTION

The technical solutions in the present application will be described below with reference to the drawings. Apparently, the described embodiments are merely some embodiments of the present application, rather than all of the embodiments.

In the following description, for the purpose of illustration rather than limitation, specific details such as specific system structures and technologies are proposed to facilitate a thorough understanding of the embodiments of the present application. However, it should be understood by those skilled in the art that the present application may also be implemented in other embodiments without these specific details. In other cases, detailed descriptions of well-known systems, apparatuses, circuits, and methods are omitted to avoid hindering the descriptions of the present application by unnecessary details.

The term "comprise" or "include" in this specification indicates presence of described features, integers, steps, operations, elements, and/or components, but does not exclude presence or addition of one or more other features, integers, steps, operations, elements, components, and/or combinations thereof. The terms "comprise", "include", and "provided with", and variations thereof all mean "including but not limited to", unless otherwise specifically emphasized.

Hereinafter, the terms "first" and "second" are used for description only and are not to be construed as indicating or implying relative importance or to implicitly indicate the number of technical features indicated. Therefore, a feature defined with "first" or "second" may explicitly or implicitly include one or more such a feature. In the description of the embodiments of the present application, "a plurality" means two or more, unless otherwise specified.

The term "and/or" herein is only an association relationship that describes the associated objects, and indicates that there may be three relationships. For example, A and/or B may indicate that: only A is present, both A and B are present, and only B is present. In addition, the character "/" herein generally indicates an "or" relationship between the associated objects before and after the "/".

With the development of smart grids, a large amount of renewable energy such as solar energy and wind energy can be incorporated into the power grid. However, due to randomness and instability of the renewable energy, a battery energy storage system with a specific capacity can be added to the alternating current power grid system, to suppress a power fluctuation caused by connection of the renewable energy to a power grid, improve power supply reliability, and improve electric energy quality. With expansion of power generation scale of renewable energy, a battery energy storage system with a larger capacity is needed. In a large-capacity battery energy storage system, a cascaded H-bridge energy storage system has advantages such as strong expandability, a large capacity, a high voltage, and a small harmonic content of an output voltage and current, and therefore has a wide application prospect.

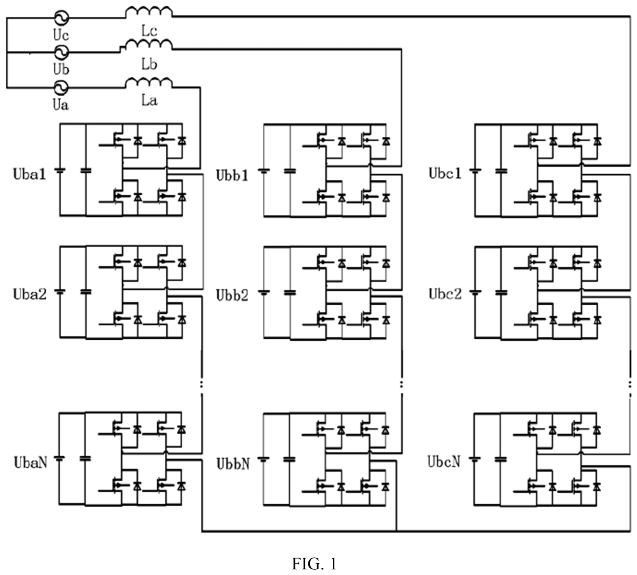

FIG. 1 is a topological diagram of a three-phase cascaded H-bridge battery energy storage system. In FIG. 1, Ua, Ub, and Uc respectively represent a phase-A system voltage, a phase-B system voltage, and a phase-C system voltage; La, Lb, and Lc respectively represent a phase-A connected inductor, a phase-B connected inductor, and a phase-C connected inductor; Uba1, Uba2, UbaN, and the like respectively represent N submodules of the phase A; Ubb1, Ubb2, UbbN, and the like respectively represent N submodules of the phase B; Ubc1, Ubc2, UbcN, and the like respectively represent N submodules of the phase C.

As shown in FIG. 1, each phase of the circuit topology is formed by cascading N same submodules, and each submodule is composed of an energy storage battery, an absorption capacitor, and an H-bridge converter. In other words, each phase is formed by cascading N same H-bridges, and a direct-current side of each H-bridge is connected in parallel to an absorption capacitor and an energy storage battery. The ends of the three phases are connected in a star shape, and each phase is connected to a three-phase power frequency grid by using a connected inductor.

There are many modulation methods for the cascaded H-bridge battery energy storage system, including carrier phase-shifting, carrier stacking, discontinuous modulation, and the like. Power distribution of modules in carrier-stacked modulation is unbalanced. In discontinuous modulation, a relationship between a quantity of switching times and an output waveform needs to be balanced. The carrier phase-shifted modulation technology has a relatively great performance advantage, can ensure power balance between modules, and can also ensure the quality of an output waveform. Therefore, the carrier phase-shifted modulation technology is widely applied to the industrial field. Currently, a modulation strategy commonly used in a cascaded H-bridge battery energy storage system is a carrier phase shifted-pulse width modulation (PS-PWM) strategy. This modulation strategy has advantages such as high quality of output electric energy, capability of outputting a relatively high equivalent switching frequency at a relatively low carrier frequency, ease of controlling an output power of each unit, and ease of implementing modular distributed control.

The PS-PWM modulation method is a modulation method suitable for cascading multi-level inverters. A PS-PWM signal output by each submodule is generated by comparing a triangular carrier with a sinusoidal wave. The sinusoidal waves of all the modules are the same, but there is a phase shift between the triangular carrier of each module and the triangular carrier of the adjacent module, such that the equivalent switching rate of the PS-PWM signal finally superimposed and output by each module is increased, and the output harmonics are greatly reduced.

As shown in FIG. 1, each submodule (H-bridge) of each phase adopts a PS-PWM modulation method with a low switching frequency, modulation waves (such as sinusoidal waves) of the respective submodules are the same, and the submodules are separately modulated by using N groups of triangular carriers, where the triangular carriers have the same frequency and amplitude, but the phases sequentially differ by a fixed angle, so that the PS-PWM pulses (signals) output by the submodules are also staggered by a certain angle, which greatly increases the equivalent switching frequency. After superposition, a waveform finally output by each phase is a multi-level step wave, and the harmonic content of the output voltage can be greatly reduced by selecting a suitable phase-shift angle.

Phase A in FIG. 1 is taken as an example. The circuit system of phase A includes N submodules. In this case, N carriers may be generated, and the N carriers exhibit successive phase differences of 2π/N. In this case, the initial phase angles (initial phases) of the N carriers may be sequentially 2π/N, (2π/N) × 2, (2π/N) × 3, ..., and 2π; that is, in the ascending order of the initial phase angles, an initial phase angle of an i^{th} carrier is (2π/N) × i, where i is any positive integer not greater than N. In this way, modulation waves of the respective submodules are completely consistent, amplitudes and frequencies of the carriers are also consistent, but phases of the carriers are different. The N carriers are sequentially allocated to the N submodules of the phase A. The carrier corresponding to each submodule may be compared with a same modulation wave (usually a sinusoidal wave), to generate a control signal for an H-bridge of the submodule, and on/off of each switch in the H-bridge is controlled by using the control signal, thereby implementing modulation on a waveform output by each submodule. In this case, an inverter voltage waveform formed after waveform signals output by the N submodules are serially superimposed is basically a sinusoidal voltage in an alternating current power grid.

In the PS-PWM modulation method, a triangular carrier is compared with a modulation wave to output a control signal, such that the method has simple calculation and is easy to implement, can reduce dependence of a control system on hardware, and can solve a real-time problem of generating the control signal. However, because there is a slight difference between initial phase angles of carriers corresponding to the submodules, output or input powers of the submodules are not completely the same. To be specific, a difference between triangular carriers of the submodules causes the active power of a single module to be unequal. Consequently, states of charge (SOCs) of energy storage batteries of different submodules are different. This increases capacity inconsistency between submodules in the same cascaded phase, and reduces an available capacity of the energy storage system. Further, an imbalance in the SOCs of the batteries will shorten the service life of the energy storage system and reduce the usage efficiency of the system. For example, a battery with a larger SOC is prone to overcharge during charging, while a battery with a smaller SOC is prone to overdischarge during discharging, and in severe cases, the submodule has to be removed, which not only reduces the stability of the system, but also reduces the utilization rate of the batteries and degrades the service life of the batteries.

Based on this, the embodiments of the present application provide a modulation method for a cascaded energy storage system, so as to solve a problem of imbalance of SOCs of energy storage batteries between intra-phase submodules of the cascaded energy storage system in a carrier phase-shifted modulation method.

The method according to the embodiments of the present application can be applied to a cascaded energy storage system, and the cascaded energy storage system may include N submodules (N ≥ 2) connected in cascade. According to the modulation method, the waveform signals output by the N submodules may be modulated based on N carriers, where the N carriers correspond one-to-one to the N submodules. Particularly, during modulation, at least one synchronous delay is performed on the N carriers, where amplitudes of the carriers remain unchanged in a time period of the synchronous delay. Performing the synchronous delay operation on the carriers is equivalent to performing a delay operation of specific duration (namely, duration of the synchronous delay) on the N carriers at the same time, which can be understood that the carrier is translated rightwards along the direction of the X-axis (the time axis), and an intersection point between the carrier and the Y-axis (the peak value axis) corresponds to an initial phase angle of the carrier. Because the carrier is translated by a non-integer multiple of its period duration, the intersection point between the carrier and the Y-axis also changes, that is, the initial phase angle of the carrier also changes. Because the synchronization operation is performed on the N carriers, the initial phase angles of the N carriers also synchronously change (the phase difference between adjacent carriers still remains unchanged). Therefore, the carriers applied to the same submodule can have a plurality of different initial phase angles. Compared with the related art in which waveform modulation is continuously performed on a submodule by using the same carrier (that is, the same initial phase angle), the modulation method according to the embodiments of the present application enables a plurality of carriers with different initial phase angles to influence the same submodule. From a statistical perspective, a plurality of initial phase angles of carriers applied to the respective submodules can mutually approach, overlap, and coincide. In this way, in the present application, unequal active power distribution of the submodules caused by inconsistent initial phase angles can be mitigated, and energy unevenness can be suppressed, such that voltages on direct-current sides of the submodules tend to be consistent, and the inconsistency of the battery capacity can be alleviated, which makes the SOC of an energy storage battery tend to be balanced.

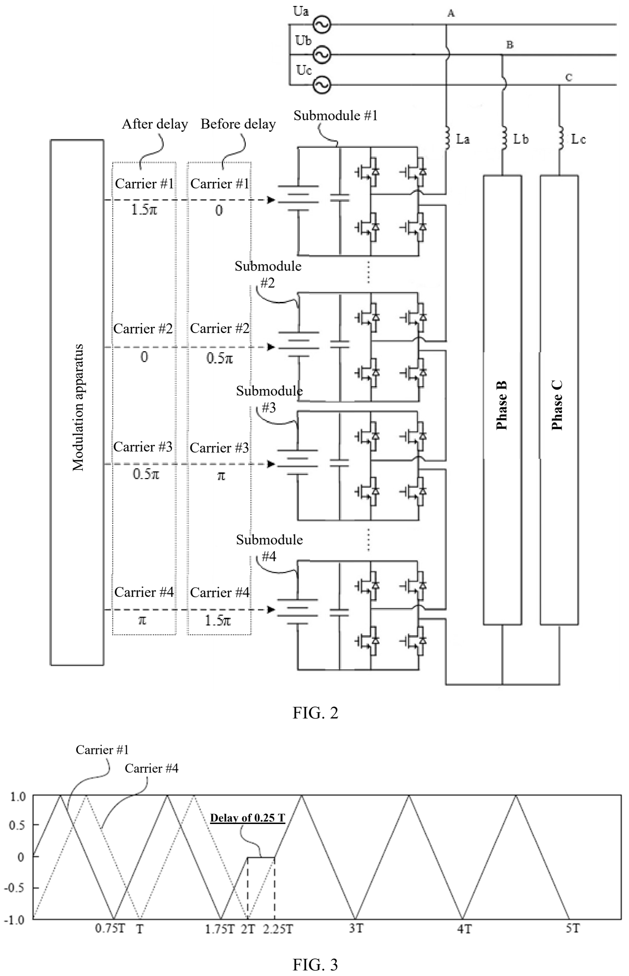

FIG. 2 is a schematic diagram of an application scenario of a modulation method for a cascaded energy storage system according to an embodiment of the present application. The modulation method for a cascaded energy storage system according to the embodiments of the present application may be applied to the scenario shown in FIG. 2. As shown in FIG. 2, the scenario includes a cascaded energy storage system and a modulation apparatus. The modulation apparatus is configured to apply carriers to submodules of the cascaded energy storage system, so as to modulate waveform signals output by the submodules. In some cases, the modulation apparatus may also be considered as a portion of the cascaded energy storage system.

The cascaded energy storage system may be a cascaded H-bridge battery energy storage system, a cascaded half-bridge battery energy storage system, a battery energy storage system based on a modular multilevel converter (MMC), or the like. The cascaded energy storage system includes a three-phase bridge arm. Each phase bridge arm includes N submodules (N ≥ 2), for example, four submodules shown in FIG. 2. One end of each phase bridge arm is connected to a three-phase power frequency grid through a connected inductor, and the other end thereof is connected in a star shape. Each submodule includes energy storage batteries disposed in parallel, an absorption capacitor, and a converter (also referred to as an inverter). The converter may be an H-bridge or a half-bridge, but is not limited thereto.

The modulation apparatus is configured to output a carrier to the submodule to modulate the waveform signal output by the submodule. The carrier may be, for example, a triangular carrier or a trapezoidal carrier. The modulation apparatus may be, for example, any electronic device, chip, controller, or processor that can implement the above functions, such as an upper computer, a lower computer, an industrial computer, an industrial control computer, or a power conversion system (PCS). The modulation method according to the embodiments of the present application may be performed by the modulation apparatus, so as to solve a problem of imbalance of SOCs of energy storage batteries between intra-phase submodules in the cascaded energy storage system.

The following uses an example in which the modulation apparatus in FIG. 2 modulates the four submodules of the phase-A bridge arm to describe the modulation method according to the embodiment of the present application. According to the modulation method according to the embodiments of the present application, the modulation apparatus first determines four carriers (e.g., triangular carriers or trapezoidal carriers). Initial phase angles of the four carriers (namely, carrier #1, carrier #2, carrier #3, and carrier #4) are different from each other and are in a one-to-one correspondence to the four submodules. For example, the initial phase angles of the four carriers are 0, 0.5*π,* π*,* and 1.5π, respectively.

The modulation apparatus outputs (applies) the four carriers to the submodules (namely, submodule #1, submodule #2, submodule #3, and submodule #4) in a one-to-one correspondence manner. After the carriers are output for a period of time, a synchronous delay operation can be performed on the four carriers, and amplitudes of the carriers remain unchanged during the synchronous delay. For example, duration of the synchronous delay may be T/4, where T is a carrier period.

FIG. 3 is a schematic diagram illustrating the change of an initial phase angle of a carrier #1 before and after a delay operation. In FIG. 3, the abscissa represents time, and the ordinate represents amplitude. Carrier #1 in FIG. 3 is used as an example. An initial phase angle before the delay is 0. At a moment 2T in FIG. 3, a synchronous delay operation is performed on the four carriers, and duration of the delay is 0.25 T. In this way, each carrier is subjected to carrier phase lagging. The carrier #1 is subjected to carrier phase lagging, which is equivalent to that the carrier #1 is translated rightwards along the direction of the X-axis (time axis), and an intersection point between the carrier #1 and the Y-axis (peak value axis) also changes. In fact, the carrier #1 after the delay changes to the carrier #4 before the delay, and the initial phase angle thereof changes from 0 to 1.5π.

Correspondingly, new initial phase angles of the four carriers change to 1.5π, 0, 0.5π, and π (each reduced by 0.5π), such that a plurality of carriers with different initial phase angles can apply to a same submodule. For example, carriers with initial phase angles of 0 and 1.5π can be applied to the submodule #1, carriers with initial phase angles of 0.5π and 0 can be applied to the submodule #2, carriers with initial phase angles of π and 0.5π can be applied to the submodule #3, and carriers with initial phase angles of 1.5π and π can be applied to the submodule #4. Initial phase angles of carriers applying to different submodules can mutually approach, overlap, and coincide, thereby mitigating unequal active power distribution of the submodules caused by different initial phase angles, such that SOCs of the energy storage batteries tend to be balanced.

Based on the topology diagram shown in FIG. 1 or the application scenario shown in FIG. 2, with reference to the modulation method for a cascaded energy storage system according to the embodiments of the present application, the following continues to specifically analyze and solve the technical problem proposed in the present application.

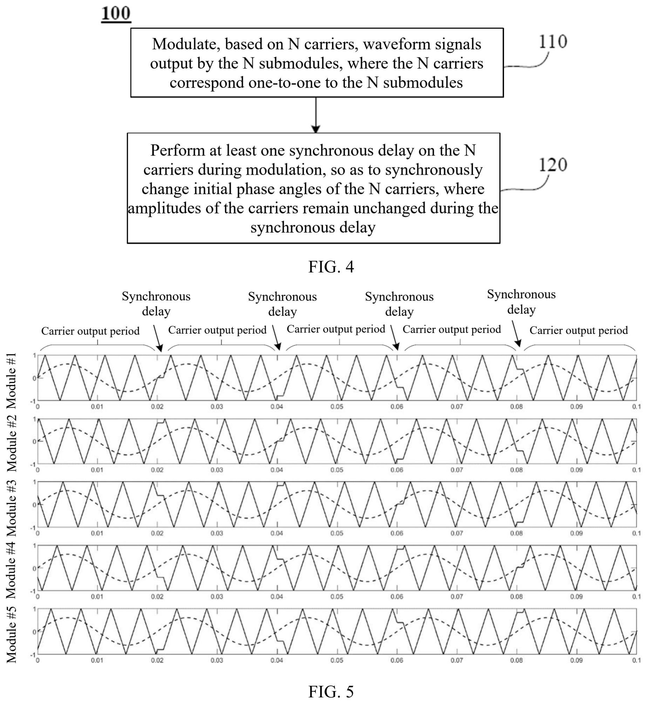

Referring to FIG. 4, FIG. 4 is a schematic flowchart of a modulation method 100 for a cascaded energy storage system according to an embodiment of the present application. The execution body of the modulation method 100 is the aforementioned modulation apparatus, and the method is used to modulate the waveform signals of the submodules of the aforementioned cascaded energy storage system, where the cascaded energy storage system includes N submodules connected in cascade, where N ≥ 2. As shown in FIG. 4, the modulation method 100 includes steps 110 to 120.

In step 110, waveform signals output by the N submodules are modulated based on N carriers, where the N carriers correspond one-to-one to the N submodules.

In step 120, at least one synchronous delay is performed on the N carriers during modulation, so as to synchronously change initial phase angles of the N carriers, where amplitudes of the carriers remain unchanged during the synchronous delay.

Specifically, the cascaded energy storage system includes N submodules connected in cascade, where N is an integer greater than or equal to 2. The modulation apparatus may first determine the N carriers that correspond one-to-one to the N submodules. The N carriers herein may be triangular carriers or trapezoidal carriers, and initial phase angles of the N carriers may be different from each other. For example, an initial phase angle of an i^{th} carrier is (2π/N) × i, where i is any positive integer not greater than N; that is, initial phase angles of the first carrier to the N^{th} carrier are sequentially 2π/N, (2π/N) × 2, (2π/N) × 3, ..., and 2π. Or, i is any natural number (including 0 and a positive integer) that is not greater than N-1; that is, initial phase angles of the first carrier to the N^{th} carrier are sequentially 0, 2π/N, (2π/N) x 2, (2π/N) x 3, ..., and (2π/N) x (N-1). For another example, the initial phase angle of the i^{th} carrier is (π/N) × i, where i is any positive integer not greater than N; that is, initial phase angles of the first carrier to the Nₜₕ carrier are sequentially π/N, (π/N) × 2, (π/N) × 3, ..., and π. Or, i is any natural number (including 0 and a positive integer) that is not greater than N-1; that is, initial phase angles of the first carrier to the N^{th} carrier are 0, π/N, (π/N) x 2, (π/N) x 3, ..., and (π/N) x (N-1).

The modulation apparatus applies the N carriers to the N submodules in a one-to-one correspondence manner based on a specific alignment relationship, so as to modulate the waveform signals output by the N submodules. In particular, during modulation of the waveform signals, the modulation apparatus performs at least one synchronous delay on the N carriers, so as to synchronously change initial phase angles of the N carriers. That is, the initial phase angle of each carrier determined in step 110 is changed to another angle through the synchronous delay operation, and the initial phase angle of each carrier may be changed once each time the synchronous delay operation is performed.

FIG. 5 is a waveform diagram of carriers corresponding to the respective submodules. In FIG. 5, the abscissa represents time, for example, a plurality of different periods are included, and the ordinate represents an amplitude of each carrier. Referring to FIGs. 3 and 5, in the descriptions of the present application, performing the synchronous delay operation on the carriers means that amplitudes (namely, peak values or magnitudes) of the N carriers remain unchanged during the synchronous delay, and after the synchronous delay ends, the N carriers continue to perform normal carrier output.

It is easy to understand that the initial phase angle is a phase angle of a carrier when the carrier starts to be output (namely, at a zero moment), namely, a phase angle corresponding to an intersection point between the carrier and the Y-axis. Delaying the carrier can be understood as translating the carrier rightwards along the direction of the X-axis (time axis). Because the carrier is translated by a non-integer multiple of its period duration, an intersection point between the carrier and the Y-axis also changes, that is, the initial phase angle of the carrier also changes. For the carriers of a certain submodule, the carriers before and after the delay applied to the submodule can be regarded as two different carriers because the initial phase angle changes. The synchronous delay operation is performed on the N carriers, to ensure that phases of two carriers with adjacent phase angles in the N carriers can sequentially differ by a fixed angle, and ensure that an inverter voltage waveform formed after waveform signals output by the N submodules are serially superimposed is basically a sinusoidal voltage in the alternating current power grid.

According to the modulation method 100 for a cascaded energy storage system according to the embodiments of the present application, during waveform signal modulation, at least one synchronous delay is performed on the N carriers applied to the N submodules, and the amplitudes of the carriers remain unchanged in a time period of the synchronous delay. Performing the synchronous delay operation on the carriers is equivalent to performing a delay operation of specific duration (namely, duration of the synchronous delay) on the N carriers at the same time, which can be understood that the carrier is translated rightwards along the direction of the X-axis (the time axis), and an intersection point between the carrier and the Y-axis (the peak value axis) corresponds to an initial phase angle of the carrier. Because the carrier is translated by a non-integer multiple of its period duration, the intersection point between the carrier and the Y-axis also changes, that is, the initial phase angle of the carrier also changes. Because the synchronization operation is performed on the N carriers, the initial phase angles of the N carriers also synchronously change (the phase difference between adjacent carriers still remains unchanged). Therefore, the carriers applied to the same submodule can have a plurality of different initial phase angles. Compared with the related art in which waveform modulation iscontinuously performed on a submodule by using the same carrier (that is, the same initial phase angle), the modulation method 100 according to the embodiments of the present application enables a plurality of carriers with different initial phase angles to influence the same submodule. From a statistical perspective, a plurality of initial phase angles of carriers applied to the respective submodules can mutually approach, overlap, and coincide. In this way, in the present application, unequal active power distribution of the submodules caused by inconsistent initial phase angles can be mitigated, and energy unevenness can be suppressed, such that voltages on direct-current sides of the submodules tend to be consistent, and the inconsistency of the battery capacity can be alleviated, which makes the SOC of an energy storage battery tend to be balanced.

In the modulation method 100 for a cascaded energy storage system according to the embodiments of the present application, a carrier delay operation is performed, such that a problem of imbalance of SOCs of energy storage batteries between intra-phase submodules of the cascaded energy storage system in a carrier phase-shifted modulation method can be solved. Therefore, the problem of overcharging and overdischarging of the battery set can be mitigated, the battery can operate in an optimal state, the utilization rate of the battery can be improved, and the service life of the battery can be prolonged. In addition, the control method used in the present application is relatively simple and easy to implement.

In a possible implementation, as shown in FIG. 5, the synchronous delay operation is performed on the N carriers for a plurality of times, and duration of each synchronous delay is equal.

Performing a plurality of times of synchronous delay on the carriers can change the initial phase angles of the carriers for a plurality of times, such that more carriers with different initial phase angles can affect a same submodule. This can further suppress the energy unevenness, and alleviate the inconsistency of the battery capacity, thereby making the SOC of the energy storage battery tend to be balanced. Duration of each synchronous delay is equal, which can not only ensure the equal value of each phase angle, but also simplify the control logic.

Optionally, synchronous delay operations may be periodically performed on the N carriers for a plurality of times. For example, the synchronous delay operation may be performed on the N carriers once at an interval of fixed duration. The fixed duration may be, for example, 1, 2, 3, or 5 power frequency cycles (each power frequency cycle is 0.02 seconds), or may be 0.2, 0.5, 1, 2, or 5 seconds.

Optionally, the duration of each synchronous delay should not be too long, which will affect the output frequency of the submodule. The duration may be determined based on the carrier period and the like. For example, the duration may be 0.1 milliseconds, 0.15 milliseconds, 0.2 milliseconds, 0.5 milliseconds, 1 millisecond, or 2 milliseconds, but is not limited thereto.

Optionally, the duration of the synchronous delay is T1, and T1 < T, where T is a carrier period. This not only can ensure that the submodule has a relatively high output frequency, but also can ensure that the initial phase angle can change after each delay, that is, can ensure that the initial phase angle after the delay is different from that before the delay.

In a possible implementation, T1 = T/N. In this way, it can be ensured that a change value of the phase angle after each delay operation can be equal to the preset phase difference, where the phase difference is a difference value between two adjacent phase angles, for example, the aforementioned 2π/N or π/N.

With the above settings, the initial phase angles of the N carriers can be changed by a preset phase difference each time on an original basis. For example, the initial phase angle of the carrier is reduced by the preset phase difference on an original basis, such that the initial phase angle of another adjacent carrier before the synchronous delay is obtained. In this way, after the N synchronous delay operations are performed, the N initial phase angles corresponding to the N carriers can be traversed once by using the initial phase angles of the carriers applied to each submodule; namely, in this case, each submodule can be affected by the carriers of the N initial phase angles. Thus, this can suppress the energy unevenness to a greatest extent, and alleviate the inconsistency of the battery capacity, thereby making the SOC of the energy storage battery tend to be balanced to a greatest extent.

Further, as shown in FIG. 5, the duration of each carrier output period (i.e., the second to the fifth carrier output periods from left to right in FIG. 5) after the first synchronous delay is equal. With the above settings, the control logic can be simplified.

As shown in FIG. 5, the synchronous delay operation is performed on the N carriers for a plurality of times, and duration of each synchronous delay is equal, where the duration is T/N, where T is a carrier period, e.g., 0.005 seconds. The duration of each carrier output period (that is, the second to the fifth carrier output periods from left to right in FIG. 5) after the first synchronous delay is equal, and the duration may be 3T + (N-1)T/N. In this case, total duration obtained by adding the duration of each synchronous delay and the duration of each carrier output period is 4 T, that is, four complete carrier periods. With the above settings, it is beneficial to simplify the control logic.

Optionally, the carrier output period before the first synchronous delay may be any duration, for example, still 4 T.

In a specific example, each phase of the three-phase cascaded energy storage system includes 30 submodules (N = 30) connected in cascade. In this case, 30 carriers with different initial phase angles need to be determined. For example, an initial phase angle of an i^{th} carrier is (2π/30) × i, where i is any positive integer not greater than 30, and frequencies of the 30 carriers are all 150 Hz, that is, a carrier period is 6.6 milliseconds. Each time one power frequency cycle elapses, a carrier delay is 0.148 milliseconds, and another time period in the power frequency cycle is the aforementioned carrier output period.

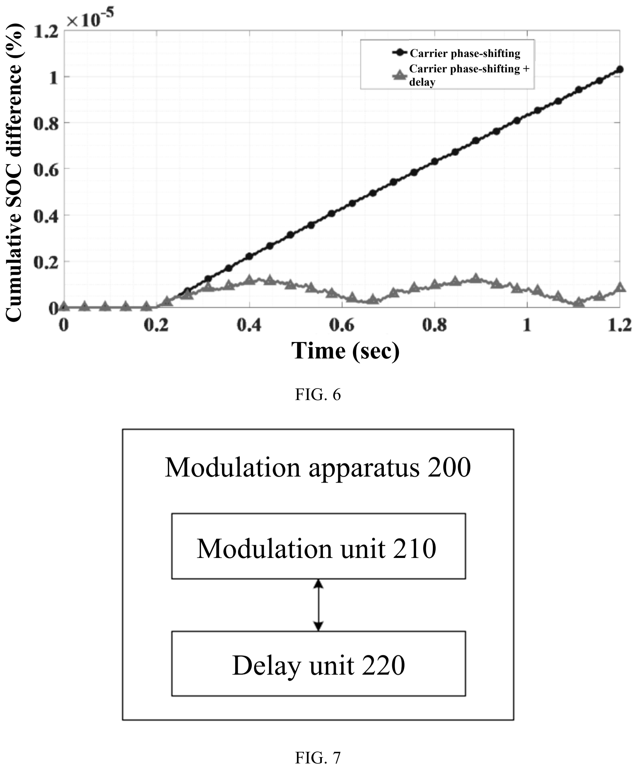

FIG. 6 is a comparison curve graph of a cumulative SOC difference between the solutions of the present application and the related technical solutions. As shown in FIG. 6, compared with the related art (carrier phase-shifting), the solution (carrier phase-shifting + delay) of the present application reduces the maximum cumulative SOC difference within 1 second between the single-phase submodules to 1/10 of the original value (related art). The cumulative SOC difference indicates a maximum SOC difference between different energy storage batteries. A smaller value of the cumulative SOC difference indicates higher SOC consistency among the energy storage batteries of the respective submodules. This indicates that the modulation method 100 according to the embodiments of the present application can effectively alleviate the inconsistency of the battery capacity, thereby making the SOCs of the energy storage batteries tend to be balanced.

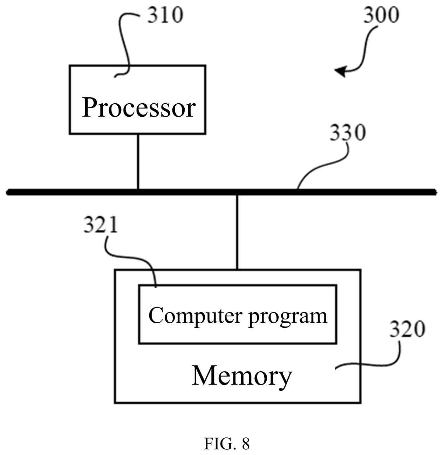

The modulation method for a cascade energy storage system according to the embodiments of the present application is described in detail above with reference to FIGs. 1-6, and the modulation apparatus according to the embodiments of the present application is described below with reference to FIGs. 7 and 8. It should be understood that the modulation apparatus shown in FIG. 7 and FIG. 8 can implement one or more steps in the method procedures shown in FIG. 4. To avoid repetition, details are not described herein again.

FIG. 7 is a schematic block diagram of a modulation apparatus 200 according to an embodiment of the present application. The modulation apparatus 200 is configured to modulate the waveform signals of the submodules of the aforementioned cascaded energy storage system, where the cascaded energy storage system includes N submodules connected in cascade, where N ≥ 2. As shown in FIG. 7, the modulation apparatus 200 includes a modulation unit 210 and a delay unit 220.

The modulation unit 210 is configured to modulate, based on N carriers, waveform signals output by the N submodules, where the N carriers correspond one-to-one to the N submodules.

The delay unit 220 is configured to perform at least one synchronous delay on the N carriers during modulation, so as to synchronously change initial phase angles of the N carriers, where amplitudes of the carriers remain unchanged during the synchronous delay.

Optionally, the synchronous delay is performed on the N carriers for a plurality of times, and duration of each synchronous delay is equal.

Optionally, the duration of the synchronous delay is T1, and T1 < T, where T is a carrier period.

Optionally, before the synchronous delay, an initial phase angle of an i^{th} carrier in the N carriers is (2π/N) × i, or the initial phase angle of the i^{th} carrier in the N carriers is (π/N) × i, where i is any positive integer not greater than N or any natural number not greater than N-1.

Optionally, T1 = T/N.

Optionally, duration of each carrier output period after first synchronous delay is equal.

Optionally, the cascaded energy storage system includes a cascaded H-bridge or a cascaded half-bridge.

Optionally, the carrier includes a triangular carrier or a trapezoidal carrier.

Specifically, the modulation apparatus 200 may correspond to the modulation apparatus in the modulation method 100 according to the embodiments of the present application. The modulation apparatus 200 may include units configured to perform the method performed by the modulation apparatus in FIG. 4. In addition, the units in the modulation apparatus 200 and the above other operations and/or functions are separately used to implement corresponding procedures of the modulation method 100. A specific process in which the units perform the above corresponding steps is described in detail in the modulation method 100. For brevity, details are not described herein again.

The embodiments of the present application further provide a modulation apparatus 300. FIG. 8 is a structural block diagram of a modulation apparatus 300 according to an embodiment of the present application. As shown in FIG. 8, the modulation apparatus 300 includes a processor 310 and a memory 320. The above components may be connected via one or more buses 330.

The modulation apparatus 300 further includes a computer program 321, where the computer program 321 is stored in the memory 320, and the computer program 321, when executed by the processor 310, causes the modulation apparatus 300 to perform the modulation method 100 shown in FIG. 4. All related content of the steps in the above method embodiments may be cited in function descriptions of corresponding physical components, and details are not described herein again.

The embodiments of the present application further provide a computer-readable storage medium, where the computer-readable storage medium includes a computer program; the computer program, when running on a computer, causes the computer to perform the method according to the above method embodiments.

The embodiments of the present application further provide a computer program product, which includes a computer program code, where the computer program code, when running on an electronic device, causes the electronic device to perform the method according to the above method embodiments.

The embodiments of the present application further provide a chip, which includes a processor configured to invoke a computer program from a memory and execute the computer program, such that an electronic device provided with the chip performs the method according to the above method embodiments.

The chip may include an input circuit or interface configured to send information or data, and an output circuit or interface configured to receive information or data.

It should be understood that, in the embodiments of the present application, the processor may be a central processing unit (CPU), or other general-purpose processor, a digital signal processor (DSP), an application specific integrated circuit (ASIC), a field-programmable gate array (FPGA) or other programmable logic device, a discrete gate or transistor logic device, a discrete hardware component, etc. The general-purpose processor may be a microprocessor or the processor may be any conventional processor.

It should be further understood that the memory in the embodiments of the present application may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM) that serves as an external cache. By way of example but not limitation, many forms of random access memories (RAMs) are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM).

Those of ordinary skill in the art will recognize that the units and algorithm steps of various examples described in conjunction with the embodiments disclosed herein can be implemented in electronic hardware, or a combination of computer software and electronic hardware. Whether these functions are performed in hardware or software depends on the particular application and design constraints of the technical solutions. Those skilled in the art may implement the described functions in varying ways for each particular application, but such implementation should not be interpreted as departing from the scope of the present application.

Those skilled in the art may clearly understand that, for the convenience and brevity in description, the specific working processes of the systems, apparatuses, and units described above may refer to the corresponding processes in the aforementioned method embodiments, and details are not described herein again.

In the several embodiments provided in the present application, it should be understood that the disclosed systems, apparatuses, and methods may be implemented in other ways. For example, the above-described apparatus embodiments are merely illustrative. For example, the division of the units is only a logical functional division, and in actual implementation, there may be other division methods. For example, a plurality of units or components may be combined or integrated into another system, or some features may be omitted or not executed. In addition, the coupling, direct coupling, or communication connection between each other that is shown or discussed may be indirect coupling or communication connection through some interfaces, apparatuses, or units, and it may be in electrical, mechanical, or other forms.

The units described as separate parts may or may not be physically separate, and parts displayed as units may or may not be physical units, that is, they may be located in one place or distributed across a plurality of network units. Some or all of the units may be selected according to actual needs to achieve the purpose of the solutions of the embodiments.

In addition, various functional units in the embodiments of the present application may be integrated into one processing unit, or various units may be physically present separately, or two or more units may be integrated into one unit.

The functions may be stored in a computer-readable storage medium if they are implemented in software functional units and sold or used as independent products. Based on such understandings, the technical solutions of the present application substantially or a part thereof that contributes to the prior art, or a part of the technical solutions, may be embodied in a software product, which is stored in a storage medium and includes several instructions for causing a computer device (which may be a personal computer, a server, or a network device) to perform all or part of the steps of the methods as defined in the embodiments of the present application. The aforementioned storage media include various media capable of storing program codes, such as a U-disk, a mobile hard disk, a read-only memory (ROM), a random access memory (RAM), a magnetic disk, and an optical disk.

The above descriptions are only embodiments of the present application, but the protection scope of the present application is not limited thereto. Any variations or substitutions that can be easily conceived by those skilled in the art within the technical scope disclosed in the present application shall be covered by the protection scope of the present application. Therefore, the protection scope of the present application shall be subject to the protection scope of the claims described.

## Claims

1. A modulation method for a cascaded energy storage system, wherein the cascaded energy storage system comprises N submodules connected in cascade, wherein N ≥ 2, and the modulation method comprises:
modulating, based on N carriers, waveform signals output by the N submodules, wherein the N carriers correspond one-to-one to the N submodules; and
performing at least one synchronous delay on the N carriers during modulation, so as to synchronously change initial phase angles of the N carriers, wherein amplitudes of the carriers remain unchanged during the synchronous delay.

2. The modulation method according to claim 1, wherein the synchronous delay is performed on the N carriers for a plurality of times, and duration of each synchronous delay is equal.

3. The modulation method according to claim 2, wherein the duration of the synchronous delay is T1, and T1 < T, wherein T is a carrier period.

4. The modulation method according to claim 3, wherein the initial phase angles of the N carriers are different.

5. The modulation method according to claim 3, wherein before the synchronous delay, an initial phase angle of an i^{th} carrier in the N carriers is (2π/N) × i, or the initial phase angle of the i^{th} carrier in the N carriers is (π/N) × i, wherein i is any positive integer not greater than N or any natural number not greater than N-1.

6. The modulation method according to any one of claims 3 to 5, wherein T1 = T/N.

7. The modulation method according to any one of claims 2 to 6, wherein duration of each carrier output period after first synchronous delay is equal.

8. The modulation method according to any one of claims 3 to 7, wherein a carrier output period before the first synchronous delay is 4 T.

9. The modulation method according to any one of claims 1 to 8, wherein modulating, based on the N carriers, the waveform signals output by the N submodules comprises:
applying the N carriers to the N submodules in a one-to-one correspondence manner, so as to modulate the waveform signals output by the N submodules.

10. The modulation method according to any one of claims 1 to 9, wherein the cascaded energy storage system comprises a cascaded H-bridge or a cascaded half-bridge.

11. The modulation method according to any one of claims 1 to 10, wherein the carrier comprises a triangular carrier or a trapezoidal carrier.

12. A modulation apparatus for a cascaded energy storage system, wherein the cascaded energy storage system comprises N submodules connected in cascade, wherein N ≥ 2, and the modulation apparatus comprises:
a modulation unit, configured to modulate, based on N carriers, waveform signals output by the N submodules, wherein the N carriers correspond one-to-one to the N submodules; and
a delay unit, configured to perform at least one synchronous delay on the N carriers during modulation, so as to synchronously change initial phase angles of the N carriers, wherein amplitudes of the carriers remain unchanged during the synchronous delay.

13. The modulation apparatus according to claim 12, wherein the synchronous delay is performed on the N carriers for a plurality of times, and duration of each synchronous delay is equal.

14. The modulation apparatus according to claim 13, wherein the duration of the synchronous delay is T1, and T1 < T, wherein T is a carrier period.

15. A computer-readable storage medium, wherein the computer-readable storage medium stores a computer program, and the computer program, when running on an electronic device, causes the electronic device to perform the modulation method according to any one of claims 1 to 11.
